Europäisches Patentamt

European Patent Office

Office européen des brevets

(19)

(11) Veröffentlichungsnummer : **0 115 774**
**B1**

# (12) EUROPÄISCHE PATENTSCHRIFT

(45) Veröffentlichungstag der Patentschrift :
28.05.86

(51) Int. Cl.⁴ : **B 25 B 27/30**

(21) Anmeldenummer : 84100103.5

(22) Anmeldetag : 07.01.84

(54) **Federnspanner.**

(30) Priorität : **09.02.83 DE 3304321**

(43) Veröffentlichungstag der Anmeldung :
**15.08.84 Patentblatt 84/33**

(45) Bekanntmachung des Hinweises auf die Patenterteilung : **28.05.86 Patentblatt 86/22**

(84) Benannte Vertragsstaaten :
**AT BE CH FR GB IT LI NL SE**

(56) Entgegenhaltungen :
**DE-A- 2 703 048**
**DE-A- 2 813 381**
**US-A- 3 256 594**

(73) Patentinhaber : **Klann, Horst**
**Terra-Wohnpark 11**
**D-7730 Villingen-Schwenningen 24 (DE)**

(72) Erfinder : **Klann, Horst**
**Terra-Wohnpark 11**
**D-7730 Villingen-Schwenningen 24 (DE)**

(74) Vertreter : **Neymeyer, Franz, Dipl.-Ing. (FH) et al**
**Haselweg 20**
**D-7730 Villingen 24 (DE)**

## Beschreibung

Die Erfindung betrifft einen Federnspanner für große Schraubenfedern, insbesondere für Kraftfahrzeugachsfedern, bestehend aus zwei losen, tellerartigen Druckplatten mit schraubenartig gewundenen Ringflächen als Auflage für die Federwindungen und mit jeweils einer zentralen Durchstecköffnung, sowie aus einer Gewindespindel, die einen Spindelkopf mit Schlüsselprofil aufweist und die sich mittels eines Axiallagers an der spindelkopfseitigen Druckplatte drehbar abstützt, und aus einem Gewinderohr, das an seinem spindelkopffernen Ende zwei sich diametral gegenüberliegende Radialfinger aufweist, durch welche das Gewinderohr mit der spindelkopffernen Druckplatte in drehfeste Zugverbindung bringbar ist und das ein Innengewinde aufweist, welches die Gewindespindel unter Verkürzung des Druckplattenabstandes einschraubbar ist.

Bei einem bekannten Federnspanner dieser Art (US-PS 3 256 594) sitzt der Spindelkopf mittels eines Ringflansches auf der Aussenseite der spindelkopfseitigen Druckplatte in Randnähe der zentralen Bohrung drehbar auf, wobei sich bei stillstehender Druckplatte die Gewindespindel drehen kann. Dier am Gewinderohr befestigte Druckplatte, die ebenfalls eine zentrale Bohrung aufweist, ist mit der Druckplatte drehfest verbunden und zwar durch zwei sich diametral gegenüberliegende Radialfinger, die jeweils zwischen zwei paarweise auf der Aussenseite der Druckplatte angeordnete Zapfen greifen und zugleich auf der Randfläche der zentralen Bohrung aufliegen. Zum Durchstecken der Radialfinger des Gewinderohres sind die Zentralbohrungen beider Druckplatten mit entsprechenden Ausnehmungen versehen. Weil bei diesem bekannten Federnspanner zwischen den beiden Druckplatten keine Verdrehsicherung besteht, d. h. weil sich die eine Druckplatte relativ zur anderen frei drehen kann und allenfalls durch die Reibung an den Gewindegängen der betreffenden Feder daran gehemmt wird, sind derartige Federnspanner in der Praxis aus Sicherheitsgründen nicht verwendbar. Es hat sich nämlich gezeigt, daß aufgrund der Steigung der Federwindungen die Gefahr sehr groß ist, daß sich die beiden Druckplatten und mit ihnen die Gewindespindel und das Gewinderohr selbsttätig im Sinne einer Entspannung der Druckfeder zu drehen beginnen und dann schnell die Gewindespindel aus dem Gewinderohr herausschrauben, so daß die Druckfeder unkontrolliert frei wird. Die Möglichkeit dieser Gefahr durch eine linksgängige Gewindespindel zu begegnen, scheidet deshalb aus, weil dabei wieder die andere Gefahr bestünde, daß versehentlich eine falsche Drehrichtung auf die Gewindespindel gegeben wird, was zu den gleich gefährlichen Unfällen führen kann.

Aufgabe der Erfindung ist es, einen Federnspanner der eingangs genannten Art derart zu verbessern, daß die beiden Druckplatten, wenn sie mit der Gewindespindel bzw. mit dem Gewinderohr in Eingriff stehen und das Gewinderohr auf die Gewindespindel aufgeschraubt ist, sich nicht mehr relativ zueinander verdrehen können, wobei die Handhabung möglichst einfach und sicher sein soll.

Gelöst wird diese Aufgabe erfindungsgemäß dadurch,

daß die Gewindespindel in einem Führungsrohr mittels eines Axiallagers drehbar gelagert ist,

daß das Führungsrohr in Spindelkopfnähe eine radial nach aussen vorspringende Auflagefläche und Drehsicherungselemente für die spindelkopfseitige Druckplatte aufweist, und

daß das Führungsrohr mit dem Gewinderohr durch eine axial verschiebbare Nut-Feder-Verbindung oder durch einen in einen Axialschlitz eingreifenden Radialvorsprung drehfest verbunden ist.

Ein solcher Federnspanner läßt sich nicht nur ebenso einfach handhaben und vorteilhaft anwenden wie der einfachere Federnspanner der eingangs genannten Art, sondern er hat darüberhinaus den funktionstechnisch entscheidenden Vorteil, daß die beiden Druckplatten sich im gespannten Zustand nicht gegeneinander verdrehen lassen, aber trotzdem nach wie vor axial relativ zueinander bewegen lassen. Durch die drehfeste Verbindung der beiden Druckplatten im gespannten Zustand ist die sehr unfallträchtige Gefahr, daß sich die Feder selbsttätig aus der Spannlage zwischen den beiden Druckplatten herausdreht und/oder die Gewindeverbindung zwischen dem Gewinderohr und der Gewindespindel selbsttätig löst, beseitigt.

Damit das Führungsrohr den maximalen Spannhub nicht verkürzt, ist das Gewinderohr teleskopartig in das Führungsrohr einschiebbar.

Eine weitere vorteilhafte Ausgestaltung der Erfindung besteht darin, daß das Gewinderohr in seiner Mantelfläche wenigstens eine beidendig offene Axialnut aufweist, in welche wenigstens ein im oder am Führungsrohr befestigter Nutenfedernstab oder ein Nutenstein axial verschiebbar eingreift. Auf diese Weise kann eine gute, verdrehsichere Führung zwischen dem Führungsrohr und dem Gewinderohr hergestellt werden, die auch eine ungehemmte Axialverschiebung des Gewinderohres relativ zum Führungsrohr ermöglicht.

Zweckmäßig ist es dabei, wenn der Nutenfedernstab zumindest annähernd in der Ebene endet, in welcher das dem Spindelkopf gegenüberliegenden Ende der Gewindespindel liegt. Auf diese Weise ist sichergestellt, daß die drehsichere Verbindung zwischen dem Führungsrohr und dem Gewinderohr über die gesamte Arbeitshublänge gewährleistet ist.

Während bei einer Ausführungsform des erfindungsgemäßen Federnspanners das Führungsrohr etwa halb so lang ist wie die Gewindespindel, sieht eine andere Ausführungsform vor, daß das Führungsrohr zumindest annähernd gleich lang ist wie die Gewindespindel. Die zuletzt genannte Ausführungsform bietet eine größere Verwindungsstabilität, als die erstgenannte Ausführungsform, bei welcher die Nutenfederstäbe über die Länge des Führungsrohres hinaus verlängert sind.

Weil bei solchen Federnspannern zwischen den beiden Druckplatten im gespannten Zustand sehr große Drehmomente auftreten können, ist es vorteilhaft, wenn das Gewinderohr in seiner Mantelfläche zwei sich diametral gegenüberliegende Axialnuten aufweist, und das Führungsrohr mit zwei in diese Axialnuten eingreifenden Nutenfederstäben versehen ist. Diese doppelte Nut-Feder-Verbindung zwischen dem Gewinderohr und dem Führungsrohr ist für beide vorgenannten Ausführungsformen gleichermaßen vorteilhaft.

Bei einer anderen Ausführungsform des erfindungsgemäßen Federnspanners ist vorgesehen, daß der Radialvorsprung am spindelkopfseitigen Ende des Gewinderohres angeordnet ist, und in einen stirnseitig offenen, bis annähernd in die Ebene der Auflagefläche reichenden axialen Führungsschlitz des Führungsrohres eingreift.

Der Vorteil einer solchen Ausführungsform besteht insbesondere in der großen Verwindungsstabilität des Führungsrohres, der einfachen Herstellbarkeit und einer zuverlässigen Funktionssicherheit.

Dabei ist es von Vorteil, wenn der Radialvorsprung in axialer Richtung fluchtend mit einem der Radialfinger angeordnet ist und das Führungsrohr einen dem Führungsschlitz diametral gegenüberliegenden, ebenfalls stirnseitig offenen zweiten Axialschlitz zur Aufnahme des zweiten, dem Radialvorsprung diametral gegenüberliegenden Radialfingers aufweist. Bei einer solchen Ausgestaltung ist es möglich, den maximalen Arbeitshub länger zu machen als der axialen Länge des Gewinderohres entspricht, da das Gewinderohr um mehr als seine axiale Länge in das Führungsrohr eingeschoben werden kann.

Um dabei die Verwindungsstabilität des Führungsrohres nicht ungebührlich durch den zweiten Axialschlitz zu schwächen, ist es zweckmäßig, wenn der zweite Axialschlitz etwa um die Länge des Gewinderohres kürzer ist als der Führungsschlitz, der diametral gegenüberliegend angeordnet ist und dessen Länge den maximalen Arbeitshub bestimmt.

Bei allen Ausführungsformen ist es zweckmäßig, wenn beide Druckplatten mit Zentralbohrungen versehen sind, deren Durchmesser geringfügig größer sind als der Aussendurchmesser des Führungsrohres und wenn die Radialfinger des Gewinderohres jeweils eine radiale Länge aufweisen, die größer ist als der Radius der Zentralbohrung.

Dadurch ist es möglich, auch die mittels der beiden Radialfinger formschlüssig am Gewinderohr befestigte Druckplatte über das Führungsrohr zu schieben und somit einen längeren maximalen Arbeitshub zu erreichen, als der Länge des Führungsrohres bzw. des Gewinderohres entspricht.

Eine weitere vorteilhafte Ausgestaltung des Federnspanners ist dadurch gekennzeichnet, daß die mit dem Gewinderohr in Zugverbindung bringbare Druckplatte in der aussenseitigen Randzone ihrer Zentralbohrung diametrale Vertiefungen aufweist, die querschnittsmäßig den Radialfingern angepaßt sind und zu deren drehsicheren Aufnahme dienen.

Dadurch ergibt sich eine sehr einfache Möglichkeit, die Druckplatte mit den Radialfingern des Gewinderohres in Eingriff zu bringen, und ausserdem wird dadurch eine im losen Zustand leicht lösbare bzw. herstellbare und im gespannten Zustand unlösbare sowohl drehsichere als auch in axialer Richtung feste, stabili Verbindung geschaffen.

Desweiteren ist es vorteilhaft, wenn die Auflagefläche des Führungsrohres mit wenigstens einem Axialvorsprung versehen ist, dem wenigstens eine querschnitsmäßig passende, radiale Ausnehmung in der Wandung der Zentralbohrung der spindelkopfseitigen Druckplatte zur Herstellung einer drehfesten Formschlußverbindung zugeordnet ist.

Es ist dabei möglich, zwei solcher Axialvorsprünge in diametraler Lage vorzusehen und deren Stirnflächen als Auflageflächen für die spindelkopfseitige Druckplatte zu benutzen, wenn diese Druckplatte ebenso wie die andere Druckplatte auf ihrer Aussenseite zwei entsprechende Vertiefungen aufweist, in welche diese Vorsprünge formschlüssig eingreifen und eine verdrehsichere Zugverbindung bilden können. Das bedeutet, daß bei dieser Ausführungsform beide Druckplatten exakt gleich ausgebildet sein können.

Um der zu spannenden Feder bzw. den Windungen der zu spannenden Feder an den Druckplatten eine gute Sitzhaftung zu verleihen, weisen die Druckplatten ringsektorartige, mit Führungsrillen und/oder mit einem Reibbelag belegte Auflageflächen für die Federwindungen der zu spannenden Feder auf.

Im folgenden wird nun die Erfindung anhand der Zeichnung, die mehrere Ausführungsbeispiele zeigt, näher erläutert. Es zeigt:

Figur 1 eine erste Ausführungsform eines Federnspanners in perspektivischer Ansicht

Figur 2 einen Teil des Federnspanners der Fig. 1 in Schnittdarstellung

Figur 3 eine andere Ausführung eines Führungsrohres

Figur 4 den in Fig. 1 dargestellten Federnspanner in Anwendung bei einer Schraubenfeder in perspektivischer Darstellung

Figur 5 den Federnspanner der Fig. 1 mit einer gespannten Feder

Figur 6 ein anderes Anwendungsbeispiel des in Fig. 1 dargestellten Federnspanners bei einer teilweise in einen sogenannten Dom ragenden Druckfeder eines Kraftfahrzeuges

Figur 7 ein Gewinderohr und ein Führungsrohr mit Gewindespindel einer anderen Ausführungsform eines Federnspanners

Figur 8 den kompletten Federnspanner mit den in Fig. 7 dargestellten Teilen

Figur 9 den in Fig. 8 dargestellten Federnspanner im Schnitt

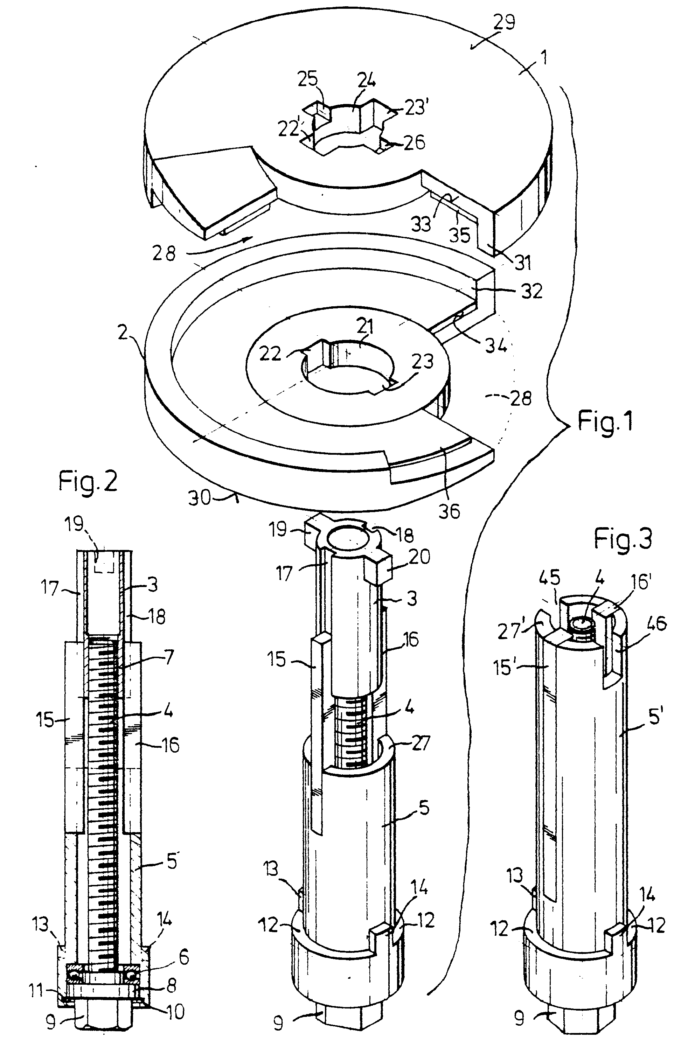

Der in der Zeichnung dargestellte Federnspanner besteht im wesentlichen aus zwei Druckplatten 1 und 2, einem Gewinderohr 3, einer in das Gewinderohr einschraubbaren Gewindespindel 4 und aus einem Führungsrohr 5, in dem die Gewindespindel 4 mittels eines Axiallagers 6 drehbar gelagert ist. Das Gewinderohr 3 weist an seinem unteren Abschnitt ein Innengewinde 7 auf (Fig. 2), das sich etwa über ein Drittel der Gesamtlänge des Gewinderohres 3 erstreckt und in welches die Gewindespindel 4 einschraubbar ist. Durch das Axiallager 6 ist die an ihrem unteren Ende mit einem flanschartigen Stützring 8 und mit einem aus dem Führungsrohr 5 axial vorstehenden, mit einem Schlüsselprofil versehenen Spindelkopf 9 mittels eines in einer Ringnut 10 sitzenden Sicherungsringes 11 axial unverschiebbar im Führungsring 5 koaxial gelagert. In der Nähe des Spindelkopfes 9 ist das Führungsrohr 5 mit einer radial vorspringenden, ringschulterartigen Auflagefläche 12 versehen, die ihrerseits zwei sich diametral gegenüberliegende Axialvorsprünge 13 und 14 aufweisen.

Bei den in den Fig. 1 und 2 dargestellten Ausführungsform des Federnspanners ist das Führungsrohr 5 etwa halb so lang wie die Gewindespindel 4, es ist jedoch mit zwei diametral angeordneten, zumindest annähernd in der gleichen Ebene wie die Gewindespindel 4 endenden Nutenfederstäben 15 und 16 versehen, welche in entsprechende Axialnuten 17 und 18 eingreifen, die in der Mantelfläche des Gewinderohres 3 angeordnet sind, wenn das Gewinderohr 3 mit der Gewindespindel 4, wie dargestellt, in Eingriff steht. Der Innendurchmesser des Führungsrohres 5 ist dabei so groß, daß das Gewinderohr 3 teleskopartig in das Führungsrohr 5 eintauchen kann. Dementsprechend sind die beiden Nutenfederstäbe 15 und 16 so gestaltet, daß sie in ihrer ganzen Länge gegenüber der Innenfläche des Führungsrohres 5 radial nach innen um die Nutentiefe der beiden Nuten 17 und 18 vorspringen. Durch diese Nut-Feder-Verbindung ist sichergestellt, daß sich das Gewinderohr 3 relativ zum Führungsrohr 5 nicht verdrehen kann, so lange das Gewinderohr 3 mit der Gewindespindel 4 bzw. so lange die Nutenfederstäbe 15 und 16 mit den Nuten 17 und 18 in Eingriff stehen. Am oberen Ende des Gewinderohres 3 sind zwei sich diametral gegenüberstehende Radialfinger 19 und 20 angeordnet. Während die Auflagefläche 12 des Führungsrohres 5 mit ihren beiden Axialvorsprüngen 13 und 14 zur Herstellung einer drehsicheren Zugverbindung zwischen der Druckplatte 2 und dem Führungsrohr 5 dient, sind die beiden Radialfinger 19 und 20 zur Herstellung einer verdrehsicheren Zugverbindung zwischen der Druckplatte 1 und dem Gewinderohr 3 vorgesehen. Die Druckplatte 2, die bei Gebrauch des Federnspanners auf der Auflagefläche 12 aufliegt und sich dann in Spindelkopfnähe befindet, weist eine Zentralbohrung 21 auf, deren Durchmesser geringfügig größer ist als der Aussendurchmesser des Führungsrohres 5 und kleiner als der Aussendurchmesser der Auflagefläche 12. Die Zentralbohrung 21 ist zudem mit zwei radialen, nutenförmigen Ausnehmungen 22 und 23 versehen, die zur formschlüssigen Aufnahme der beiden Axialvorsprünge 13 und 14 dienen. Ausserdem dienen diese Ausnehmungen 22 und 23 zum Durchstecken der Radialfinger 19 und 20 des Gewinderohres 3. Entsprechend sind die Querschnittsprofile der Ausnehmungen 22 und 23 sowie der Axialvorsprünge 13 und 14 und der Radialvorsprünge 19 und 20 aufeinander abgestimmt.

Die andere mit dem Gewinderohr 3 in drehfeste Zugverbindung zu bringende Druckplatte 1 weist ebenfalls eine Zentralbohrung 24 auf, die mit zwei in axialer Richtung durchgehend offenen, diametral zueinander angeordneten Ausnehmungen 22' und 23' versehen ist. Diese Ausnehmungen 22' und 23' dienen ebenfalls zum axialen Hindurchstecken der Radialfinger 19 und 20 des Gewinderohres 3. Sie haben deshalb die gleiche Breite und gleiche radiale Weite wie die Ausnehmungen 22 und 23 der Zentralbohrung 21 der Druckplatte 2. Auf der in der Zeichnung sichtbaren Aussenseite sind im Randbereich der Zentralbohrung 24 zwei um 90° versetzt zu den Ausnehmungen 22' und 23' angeordnete Vertiefungen 25 und 26 vorgesehen, in welche die Radialfinger 19 und 20 formschlüssig eingesetzt werden können, um zwischen dem Gewinderohr 3 und der Druckplatte 1 eine drehfeste Zugverbindung herzustellen, wenn wie das beispielsweise die Fig. 1 zeigt, der Durchmesser der Zentralbohrung 24 nur geringfügig größer ist als der Aussendurchmesser des Gewinderohres 3, also das Führungsrohr 5 nicht in die Zentralbohrung 24 eindringen kann, so wird der Spannhub dadurch begrenzt, daß die Spannplatte 1 auf der oberen Stirn-Ringfläche 27 des Führungsrohres 5 aufsitzt. Wenn man jedoch die Zentralbohrung 24 mit einem größeren Durchmesser versieht, so daß sie in der Lage ist auch das Führungsrohr 5 aufzunehmen und wenn man zudem, wie in Fig. 3 dargestellt ist, das Führungsrohr 5 noch mit Axialschlitzen versieht, in welche die beiden Radialfinger 19 und 20 axial eindringen können, so hat das Führungsrohr 5 auf die Spannhubbegrenzung keinen Einfluß.

Die beiden Druckplatten 1 und 2 sind im wesentlichen gleich ausgebildet, wenn man von der dargestellten unterschiedlichen Gestaltung der Zentralbohrungen 21 und 24 und den Vertiefungen 25 und 26 der Druckplatte 1 absieht, wobei aber durchaus die Möglichkeit besteht, die Druckplatten auch diesbezüglich identisch auszubilden, wie nachstehend noch näher erläutert wird. Beide Druckplatten haben die Form einer tellerartigen kreisrunden Scheibe mit jeweils einem ringsegmentartigen, sich etwa über 70 bis 90° erstreckenden Ausschnitt 28, der zum Durchführen eines Federwindungsabschnittes dient. Ihre jeweils auf den voneinander abgekehrten Seiten angeordneten Aussenflächen 29 bzw. 30 sind glatt. Auf den einander zugekehrten Innenseiten sind jeweils innerhalb eines am äusseren Rand umlaufenden Ringbundes 31 bzw. 32 schraubenartig gewundene Ringflächen 33 bzw. 34 vorgesehen, die beim gezeigten Ausführungsbeispiel der Fig. 1 jeweils mit einem Reibbelag 35 bzw. 36 in Form eines aufgeklebten oder aufvulkanisierten Gummibandes versehen sind. Diese Reibbeläge 35 und 36 sollen dazu dienen, eine bessere Halterung der jeweiligen Federwindung, an welche die Platten angesetzt sind, in radialer Richtung zu gewährleisten. Anstelle eines Gummibandes kann als Reibbelag auch z. B. ein Schmirgelstreifen vorgesehen sein und anstelle eines Reibbelages könnten die Ringflächen 33 und 34 mit einer oder mehreren konzentrischen Rillen, die ebenfalls eine Zentrierung der eingespannten Federwindungen bewirken können, versehen sein.

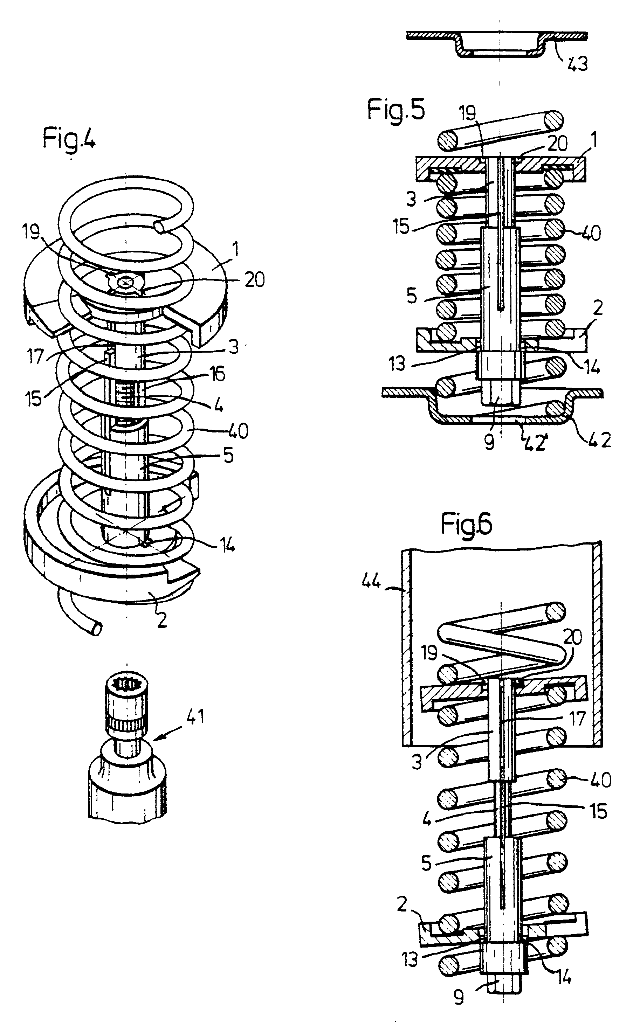

Die Handhabung und Anwendung eines solchen Federnspanners soll nun anhand der Fig. 4, 5 und 6 erläutert werden. Fig. 4 zeigt eine bereits aus einem Kraftfahrzeug ausgebaute oder noch nicht eingebaute Schraubenfeder 40 eines Kraftfahrzeuges, in welche der Federnspanner der Fig. 1 bereits spannbereit eingesetzt ist. Dabei erfolgte das Einsetzen in der Weise, daß zunächst die Druckplatten 1 und 2 jeweils separat in der dargestellten Weise zwischen zwei Windungsgänge der Schraubenfeder 40 von der Seite her eingesetzt wurden, bis sie eine zu den Federwindungen etwa konzentrische Lage eingenommen haben. Dann wurde von unten her das aus dem Gewinderohr 3, der Gewindespindel 4 und dem Führungsrohr 5 bestehende Spannaggregat in axialer Richtung zunächst durch die untere Druckplatte 2 und dann durch die obere Druckplatte 1 hindurchgesteckt wurde um die beiden Radialfinger 19 und 20 in die Vertiefungen 25 und 26 der oberen Druckplatte 1 zu setzen. Es ist dabei darauf zu achten, daß die Axialvorsprünge 13 und 14 in die Ausnehmungen 22 und 23 der unteren Druckplatte 2 zu sitzen kommen und der Rand der Zentralbohrung 21 auf der Auflagefläche 12 aufsitzt. Man kann von Hand oder mittels eines Schlagschraubers 41 die Gewindespindel 4 in Drehung versetzt werden, so daß sich eine Verkürzung des Plattenabstandes ergibt und dabei die zwischen den Druckplatten 1 und 2 befindlichen Federwindungen zusammengedrückt werden. Es ist dabei erkennbar, daß sich ausserhalb der beiden Druckplatten 1 und 2 noch eine oder mehrere Windungen der Schraubenfeder 40 befinden können, die zwar die Verkürzung der Gesamtfederlänge mitmachen, jedoch selbst nicht zusammengedrückt werden.

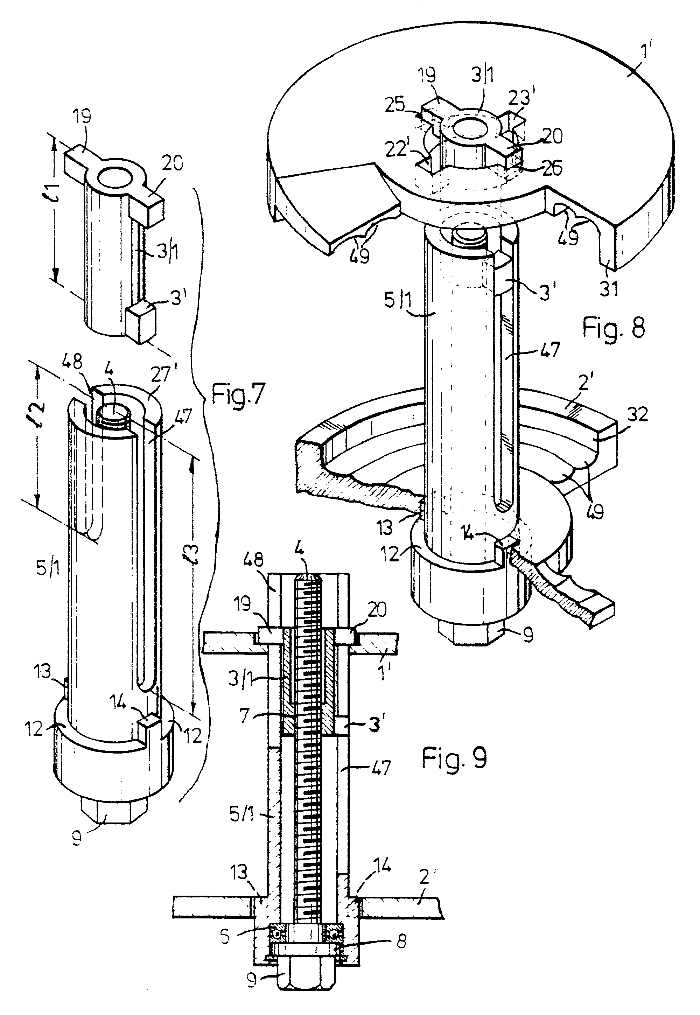

Je nach der Anzahl der zwischen den Druckplatten 1 und 2 liegenden Federwindungen können diese maximal so weit zusammengepreßt werden, daß sie sich berühren. Dann kann diese Schraubenfeder 40 beispielsweise in der in Fig. 5 dargestellten Weise in einem Kraftfahrzeug zwischen einer unteren Stützpfanne 42 und einem oberen Stützteller 43 angebracht und durch entsprechendes Drehen der Gewindespindel entspannt werden, bis die ausserhalb der oberen Druckplatte 1 liegende Windung am Stützteller 43 anliegt und die beiden Druckplatten 1 und 2 keinem Federdruck mehr ausgesetzt sind. Dann wird durch weiteres Drehen der Gewindespindel 4 das Gewinderohr 3 so weit angehoben, daß die beiden Radialfinger 19 und 20 aus den Vertiefungen 25 und 26 der oberen Druckplatte 1 nach oben ausgehoben, das Führungsrohr 5 mit dem Gewinderohr 3 um 90° verdreht und nach unten durch beide Druckplatten 1 und 2 herausgezogen werden kann. Danach werden dann die beiden Druckplatten 1 und 2 seitlich aus der Feder herausgenommen. Um das Spannaggregat nach unten herausnehmen zu können, ist die Stützpfanne 42 mit einer Zentralöffnung 42' versehen. In Fig. 6 ist dargestellt, wie die Schraubenfeder 40 beispielsweise auch so eingesetzt werden kann, daß sie mit ihrem oberen Ende in einen im Fahrzeug vorhandenen Dom 44 hineinragt, wenn die Schraubenfeder 40 entspannt ist. Das Herauslösen des Führungsrohres 5 und des Gewinderohres 3 aus den beiden Druckplatten 1 und 2 erfolgt in der vorbeschriebenen Weise. Während dann die untere Druckplatte 2 einfach seitlich aus der Schraubenfeder 40 herausgezogen werden kann, ist es erforderlich, die obere Druckplatte den Windungen entlang nach unten zu drehen um sie dann, wenn sie den Dom 44 verlassen hat, ebenfalls seitlich herausnehmen zu können.

In Fig. 3 ist ein Führungsrohr 5' dargestellt, das gleich lang ist wie die Gewindespindel 4 und deren Nutenfederstäbe 15' und 16' vollständig in die Wandung integriert sind. Dieses Führungsrohr 5' läßt sich ohne weiteres mit dem Gewinderohr 3 der Fig. 1 und 2 kombinieren. Damit der maximale Arbeitshub durch die obere Stirnringfläche 27' nicht begrenzt wird, sind zwei um 90° zu den Nutenfederstäben 15' und 16' versetzt angeordnete, sich also auch diametral gegenüberliegende Axialschlitze 45 und 46 vorgesehen, in welche die beiden Radialfinger 19 und 20 des Gewinderohres 3 eindringen können, welche ja auch jeweils um 90° zu den Axialnuten 17 und 18 angeordnet sind. Weil bei dieser Ausführungsform des Führungsrohres 5' die Nutenfederstäbe 15' und 16' über ihre ganze Länge in die Wandung integriert sind, weisen sie eine größere Stabilität gegen Verdrehen auf als die über die Länge des Führungsrohres 5 hinaus verlängerten Nutenführungsstäbe 15 und 16.

In Verbindung mit den beiden Druckplatten 1 und 2 sowie mit dem Gewinderohr 3 läßt sich das in Fig. 3 dargestellte Führungsrohr 5' mit der darin drehbar gelagerten Gewindespindel 4 in gleicher Weise handhaben und anwenden wie zuvor beschrieben.

Bei dem in den Fig. 7, 8 und 9 dargestellten Federnspanner ist ein Führungsrohr 5/1 vorgesehen, das ebenso wie die Führungsrohre 5 und 5' mit einer Auflagefläche 12 und zwei Axialvorsprüngen 13 und 14 versehen ist und in welcher die Gewindespindel 4 in der gleichen Weise drehbar gelagert ist. Das Führungsrohr 5/1 ist gleich lang wie die Gewindespindel 4, d. h. ihre obere Stirnfläche 27' liegt zumindest annähernd in der gleichen Ebene wie die stirnseitige Endfläche der Gewindespindel 4. Statt zweier Nutenfederstäbe wie beim Ausführungsbeispiel der Fig. 1 oder zweier Nutensteine, die beim Führungsrohr 5' der Fig. 3 vorgesehen sein könnten, weist das Führungsrohr 5/1 einen axialen Führungsschlitz 47 auf, der sich bis in die Nähe der Auflagefläche 12 erstreckt und der an der oberen Stirnringfläche 27' offen ist. Das Gewinderohr 3/1 ist an seinem unteren Ende mit einem Radialvorsprung 3' versehen, der in axialer Richtung fluchtend mit dem Radialfinger angeordnet ist und der dafür vorgesehen ist, im Führungsschlitz 47 des Führungsrohres 5/1 axial verschiebbar geführt zu werden und die drehfeste Verbindung zwischen dem Gewinderohr 3/1 und dem Führungsrohr 5/1 herzustellen. Der Innendurchmesser des Führungsrohres 5/1 und der Aussendurchmesser des Gewinderohres 3/1 sind so aufeinander abgestimmt, daß das Gewinderohr 3/1 teleskopartig in das Führungsrohr 5/1 eintauchen kann. Damit bei diesem Eintauchen des Gewinderohres 3/1 in das Führungsrohr 5/1 die beiden Radialfinger 19 und 20 nicht auf der oberen Stirnringfläche 27' aufsitzen und den Arbeitshub begrenzen, ist einerseits die fluchtende Anordnung zwischen dem Radialfinger 20 und dem Radialvorsprung 3' vorgesehen und andererseits für den Radialfinger 19 im Führungsrohr 5/1 ein zweiter oben offener Axialschlitz 48 diametral zum Führungsschlitz 47 angeordnet. Dabei ist die Länge l2 des Axialschlitzes 48 etwa um die Länge l1 des Gewinderohres 3/1 kürzer als die Länge l3 des Führungschlitzes 47, um die Verwindungsstabilität des Führungsrohres 5/1 nicht ungebührlich zu schwächen. Damit das Gewinderohr 3/1 auch dann vollständig in das Führungsrohr 5/1 eindringen kann, wenn es mit der Druckplatte 1' in der in Fig. 8 dargestellten Weise verbunden ist, ist diese Druckplatte 1' mit einer Zentralbohrung 24' versehen, deren Durchmesser geringfügig größer ist als der Aussendurchmesser des Führungsrohres 5/1, so daß das Führungsrohr 5/1 in diese Zentralbohrung 24' eindringen kann. Die beiden Druckplatten 1' und 2', die im übrigen die gleiche Form aufweisen, wie die Druckplatten 1 und 2 des Ausführungsbeispieles der Fig. 1 und 2, weisen statt der Reibbeläge 35 und 36 jeweils konzentrische Führungsrillen 49 auf, in denen die Federwindungen, die mit den Druckplatten 1' und 2' unmittelbar in Berührung kommen, eine gute zentrierende radiale Führung erhalten, was für ein gleichmäßiges geradliniges Spannen der Schraubenfeder 40 wichtig ist.

Bei dieser Ausführungsform und auch bei der Ausführungsform mit dem in Fig. 3 dargestellten Führungsrohr 5' ist es möglich jeweils zwei völlig gleich geformte Druckplatten 1' und 2' zu verwenden, wobei die untere Druckplatte 2' entweder in der in Fig. 8 dargestellten Weise auf der Auflagefläche 12 aufsitzend oder um 90° verdreht angeordnet sein kann, wobei dann die beiden Axialvorsprünge 13 und 14 in die ebenfalls vorhandenen Vertiefungen 25 und 26 eingreifen würden. In diesem Fall würde sich dann die untere Druckplatte 2' auf den Stirnflächen der Axialvorsprünge 13 und 14 und nicht auf der Auflagefläche 12 abstützen.

Die Anwendung und Handhabung dieses in den Fig. 7, 8 und 9 dargestellten Federnspanners ist im wesentlichen genau gleich wie bei dem Federnspanner der Fig. 1 und 2.

## Patentansprüche

1. Federnspanner für große Schraubenfedern (40), insbesondere für Kraftfahrzeugachsfedern, bestehend aus zwei losen, tellerartigen Druckplatten (1, 2) mit schraubenartig gewundenen Ringflächen (33, 34) als Auflage für die Federwindungen und mit jeweils einer zentralen Durchstecköffnung (23, 24), sowie aus einer Gewindespindel (4), die einen Spindelkopf mit Schlüsselprofil aufweist und die sich mittels Axiallagers an der spindelkopfseitigen Druckplatte (2) drehbar abstützt und aus einem Gewinderohr (3), das an seinem spindelkopffernen Ende zwei sich diametral gegenüberliegende Radialfinger (19, 20) aufweist, durch welche das Gewinderohr mit der spindelkopffernen Druckplatte (1) in drehfeste Zugverbindung bringbar ist und das ein Innengewinde (7) aufweist, in welches die Gewindespindel (4) unter Verkürzung des Druckplattenabstandes einschraubbar ist, dadurch gekennzeichnet,

daß die Gewindespindel (4) in einem Führungsrohr (5, 5', 5/1) mittels eines Axialdrucklagers (6) drehbar gelagert ist,

daß das Führungsrohr (5, 5', 5/1) in Spindelkopfnähe eine radial nach aussen vorspringende Auflagefläche (12) und Drehsicherungselemente (13, 14) für die spindelkopfseitige Druckplatte (2, 2') aufweist und

daß das Führungsrohr (5, 5', 5/1) mit dem Gewinderohr (3, 3/1) durch eine axial verschiebbare Nut-Feder-Verbindung (15, 15', 16, 16', 17, 18) oder durch einen in einen axialen Führungsschlitz 47 eingreifenden Radialvorsprung (3') verbunden ist.

2. Federnspanner nach Anspruch 1, dadurch gekennzeichnet, daß das Gewinderohr (3, 3/1) teleskopartig in das Führungsrohr einschiebbar ist.

3. Federnspanner nach Anspruch 1 oder 2, dadurch gekennzeichnet, daß das Gewinderohr (3) in seiner Mantelfläche wenigstens eine beidendig offene Axialnut (17, 18) aufweist, in welche wenigstens ein im oder am Führungsrohr (5, 5') befestigter Nutenfedernstab (15, 16, 15', 16') oder ein Nutenstein axial verschiebbar eingreift.

4. Federnspanner nach Anspruch 1, 2 oder 3 dadurch gekennzeichnet, daß der Nutenfedernstab (15, 15', 16, 16') zumindest annähernd in der Ebene endet, in welcher das dem Spindelkopf gegenüberliegende Ende der Gewindespindel (4) liegt.

5. Federnspanner nach einem der Ansprüche 1, 2 oder 3, dadurch gekennzeichnet, daß das Führungsrohr (5', 5/1) zumindest annähernd gleich lang ist wie die Gewindespindel (4).

6. Federnspanner nach einem der Ansprüche 1 bis 5, dadurch gekennzeichnet, daß das Gewinderohr (3) in seiner Mantelfläche zwei sich diametral gegenüberliegende Axialnuten (17, 18) aufweist und daß das Führungsrohr (5, 5') mit zwei in diese Axialnuten eingreifenden Nutenfedernstäbe (15, 15', 16, 16') versehen ist.

7. Federnspanner nach Anspruch 1 und 2, dadurch gekennzeichnet, daß der Radialvorsprung (3') am spindelkopfseitigen Ende des Gewinderohres (3/1) angeordnet ist und in einen stirnseitig offenen, bis annähernd in die Ebene der Auflagefläche (12) reichenden axialen Führungsschlitz (47) des Führungsrohres (5/1) eingreift.

8. Federnspanner nach Anspruch 7, dadurch gekennzeichnet, daß der Radialvorsprung (3') in axialer Richtung fluchtend mit einem der Radialfinger (20) angeordnet ist und daß Führungsrohr (5/1) einen dem Führungsschlitz (47) diametral gegenüberliegenden, ebenfalls stirnseitig offenen zweiten Axialschlitz (48) zur Aufnahme des zweiten dem Radialvorsprung (3') diametral gegenüberliegenden Radialfingers (19) aufweist.

9. Federnspanner nach Anspruch 8, dadurch gekennzeichnet, daß der zweite Axialschlitz (48) etwa um die Länge (l1) des Gewinderohres (3/1) kürzer ist als der Führungsschlitz (47).

10. Federnspanner nach Anspruch 1, dadurch gekennzeichnet, daß beide Druckplatten (1, 1', 2, 2') mit Zentralbohrungen (21, 24, 24') versehen sind, deren Durchmesser geringfügig größer sind als der Aussendurchmesser des Führungsrohres (5', 5/1), und daß die Radialfinger (19, 20) des Gewinderohres (3, 3/1) jeweils eine radiale Länge aufweisen, die größer ist als der Radius der Zentralbohrung (21, 24, 24').

11. Federnspanner nach Anspruch 10, dadurch gekennzeichnet, daß die mit dem Gewinderohr (3, 3/1) in Zugverbindung bringbare Druckplatte (1, 1') in der aussenseitigen Randzone ihrer Zentralbohrung (24, 24') diametrale Vertiefungen (25, 26) aufweist, die querschnittsmäßig den Radialfingern (19, 20) angepaßt sind und zu deren drehsicheren Aufnahme dienen.

12. Federnspanner nach Anspruch 1, dadurch gekennzeichnet, daß die Auflagefläche (12) des Führungsrohres (5, 5', 5/1) mit wenigstens einem Axialvorsprung (13, 14) versehen ist, dem wenigstens eine querschnittsmäßig passende radiale Ausnehmung (22, 23) in der Wandung der Zentralbohrung (21) der spindelkopfseitigen Druckplatte (2, 2') zur Herstellung einer drehfesten Formschlußverbindung zugeordnet ist.

13. Federnspanner nach Anspruch 1, dadurch gekennzeichnet, daß die Druckplatten (1, 2, 1', 2') ringsektorartige mit Führungsrillen (49) versehene und/oder mit einem Reibbelag (35, 36) belegte Auflageflächen (33, 34) für die Federwindungen der zu spannenden Feder (40) aufweisen.

**Claims**

1. Spring stresser for large helical springs (40), especially for motor vehicle axle springs, consisting of two loose dish-type thrust plates (1, 2) with annular surfaces (33, 34) wound in screw manner as support for the spring turns, each with a central push-through opening (23, 24), and of a threaded spindle (4) which comprises a spindle head with spanner profile and is rotatably supported by means of axial bearing on the thrust plate (2) on the spindle head side, and of a threaded tube (3) which comprises on its end remote from the spindle head two diametrically opposite radial fingers (19, 20) by which the threaded tube is bringable into rotation-fast tension connection with the thrust plate (1) remote from the spindle head, and which comprises an internal threading into which the threaded spindle (4) is screwable, shortening the distance between the thrust plates, characterised : in that the threaded spindle (4) is rotatably mounted in a guide tube (5, 5', 5/1) by means of an axial thrust bearing (6), in that the guide tube (5, 5', 5/1) comprises in the vicinity of the spindle head a radially outwardly protruding support face (12) and rotational securing elements (13, 14) for the thrust plate (2, 2') on the spindle head side, and in that the guide tube (5, 5', 5/1) is connected with the threaded tube (3, 3/1) by an axially displaceable tongue-and-groove connection (15, 15', 16, 16', 17, 18) or by a radial projection (3') engaging in an axial guide slot 47.

2. Spring stresser according to claim 1, characterised in that the threaded tube (3, 3/1) is telescopically pushable into the guide tube.

3. Spring stresser according to claim 1 or 2, characterised in that the threaded tube (3) comprises in its circumferential surface at least one axial groove (17, 18) open at both ends in which at least one groove tongue bar (15, 16, 15', 16') secured in or on the guide tube (5, 5') or a groove block engages axially displaceably.

4. Spring stresser according to claim 1, 2 or 3, characterised in that the groove tongue bar (15, 15', 16, 16') terminates at least approximately in the plane in which the end of the threaded spindle (4) opposite to the spindle head lies.

5. Spring stresser according to one of claims 1, 2 or 3, characterised in that the guide tube (5', 5/1) is at least approximately the same length as the threaded spindle (4).

6. Spring stresser according to one of claims 1 to 5, characterised in that the threaded tube (3) comprises two diametrically opposed axial grooves (17, 18) in its circumferential surface and in that the guide tube (5, 5') is provided with two groove tongue bars (15, 15', 16, 16') engaging in these axial grooves.

7. Spring stresser according to claims 1 and 2, characterised in that the radial projection (3') is arranged on the spindle head end of the threaded tube (3/1) and engages in a terminally open axial guide slot (47) of the guide tube (5/1) reaching approximately into the plane of the support face (12).

8. Spring stresser according to claim 7, characterised in that the radial projection (3') is arranged in the axial direction in alignment with one of the radial fingers (20) and in that the guide tube (5/1) comprises a likewise terminally open second axial slot (48) lying diametrically opposite to the guide slot (47) for the reception of the second radial finger (19) lying diametrically opposite to the radial projection (3').

9. Spring stresser according to claim 8, characterised in that the second axial slot (48) is shorter than the guide slot (47) by approximately the length (l1) of the threaded tube (3/1).

10. Spring stresser according to claim 1, characterised in that both thrust plates (1, 1', 2, 2') are provided with central bores (21, 24, 24') the diameters of which are slightly larger than the external diameter of the guide tube (5', 5/1), and in that the radial fingers (19, 20) of the threaded tube (3, 3/1) each have a radial length which is greater than the radius of the central bore (21, 24, 24').

11. Spring stresser according to claim 10, characterised in that the thrust plate (1, 1') which is bringable into tension connection with the threaded tube (3, 3/1) comprises diametrical depressions (25, 26) in the external marginal zone of its central bore (24, 24') which are adapted cross-sectionally to the radial fingers (19, 20) and serve for their rotation-secure reception.

12. Spring stresser according to claim 1, characterised in that the support face (12) of the guide tube (5, 5', 5/1) is provided with at least one axial projection (13, 14) with which there is associated at least one cross-sectionally fitting radial recess (22, 23) in the wall of the central bore (21) of the thrust plate (2, 2') on the spindle head side, for the production of a rotation-fast shape-engaging connection.

13. Spring stresser according to claim 1, characterised in that the thrust plates (1, 2, 1', 2') comprise support faces (33, 34) of ring sector type provided with guide grooves (49) and/or lined with a friction lining (35, 36), for the spring turns of the spring (40) to be stressed.

**Revendications**

1. Compresseur de ressorts pour grands ressorts hélicoïdaux (40), notamment pour ressorts de suspension de véhicules automobiles, composé de deux plaques de pression mobiles en forme d'assiette (1), (2) avec des surfaces annulaires enroulées en hélice (33), (34) formant appui pour les spires du ressort et munies chacune d'une ouverture de passage (23), (24), ainsi que d'une broche filetée (4) qui comporte une tête de broche (9) avec un profil pour une clé de serrage et qui prend appui de façon tournante sur la plaque de pression (2) disposée de son côté, et d'un tube fileté (3) qui comporte deux doigts radiaux (19), (20) diamétralement opposés, à son extrémité éloignée de la tête de broche (9), par lesquels le tube fileté (3) est rendu solidaire, en traction et en rotation, de la plaque de pression (1) éloignée de la tête de broche (9), et qui comporte un filetage intérieur (7) dans lequel la broche filetée (4) est vissée pour raccourcir la distance entre les deux plaques de pression (1), (2), caractérisé en ce que la broche filetée (4) est montée tournante dans un tube de guidage (5, 5', 5/1) à l'aide d'un palier de butée (6), que le tube de guidage (5, 5', 5/1) comporte, près de la tête de la broche (9), une surface d'appui (12) débordant radialement vers l'extérieur et des éléments anti-rotation (13), (14) pour la plaque de pression (2, 2') disposée du côté de la tête de broche (9), que le tube de guidage (5, 5', 5/1) est lié au tube fileté (3, 3/1) par une liaison à rainure et clavette parallèle coulissante (15, 15', 16, 16', 17, 18) ou par une saillie radiale (3') s'engageant dans une fente de guidage axiale 47.

2. Compresseur de ressorts selon la revendication 1, caractérisé en ce que le tube fileté (3, 3/1) coulisse de façon télescopique dans le tube de guidage (5, 5', 5/1).

3. Compresseur de ressorts selon la revendication 1 ou 2, caractérisé en ce que le tube fileté (3) comporte dans sa surface extérieure au moins une rainure axiale ouverte aux deux extrémités (17, 18) dans laquelle au moins une clavette parallèle longue (15, 16, 15', 16') fixée dans le tube de guidage (5, 5') ou à celui-ci ou un coulisseau s'engage et peut se déplacer axialement.

4. Compresseur de ressorts selon l'une des revendications précédentes, caractérisé en ce que la clavette parallèle longue (15, 15', 16, 16') se termine, au moins approximativement, dans le plan dans lequel est située l'extrémité de la broche filetée (4) opposée à la tête de broche (9).

5. Compresseur de ressorts selon l'une des revendications 1 à 3, caractérisé en ce que le tube de guidage (5', 5/1) est, au moins approximativement, aussi long que la broche filetée (4).

6. Compresseur de ressorts selon l'une des revendications précédentes, caractérisé en ce que le tube fileté (3) comporte dans sa surface extérieure deux rainures axiales diamétralement opposées (17, 18) et que le tube de guidage (5, 5') est muni de deux clavettes parallèles longues (15, 15', 16, 16') qui s'engagent dans ces rainures axiales.

7. Compresseur de ressorts selon la revendication 2, caractérisé en ce que la saillie radiale (3') est disposée à l'extrémité du tube fileté (3/1) située du côté de la tête de broche (9) et s'engage dans une fente de guidage axiale (47) du tube de guidage (5/1), qui s'étend approximativement jusqu'au plan de la surface d'appui (12).

8. Compresseur de ressorts selon la revendication 7, caractérisé en ce que la saillie radiale (3') est alignée sur l'un des doigts radiaux (20) dans la direction axiale et que le tube de guidage (5/1) comporte une seconde fente axiale (48) diamétralement opposée à la fente de guidage (47) et également ouverte à l'extrémité supérieure dudit tube, pour recevoir le second doigt radial (19) diamétralement opposé à la saillie radiale (3').

9. Compresseur de ressorts selon la revendication 8, caractérisé en ce que la seconde fente axiale (48) est plus courte que la fente de guidage (47) d'une valeur égale à environ la longueur l1 du tube fileté (3/1).

10. Compresseur de ressorts selon la revendication 1, caractérisé en ce que les deux plaques de pression (1, 1', 2, 2') sont munies d'un trou central (21, 24, 24') dont le diamètre est légèrement plus grand que le diamètre extérieur du tube de guidage (5', 5/1) et que les doigts radiaux (19, 20) du tube fileté (3, 3/1) ont une longueur radiale plus grande que le rayon dudit trou central.

11. Compresseur de ressorts selon la revendication 10, caractérisé en ce que la plaque de pression (1, 1') solidaire en traction du tube fileté (3, 3/1) comporte, dans la zone extérieure du trou central (24, 24'), des renfoncements diamétraux (25), (26) dont la section droite est adaptée à la section droite des doigts radiaux (19), (20) et qui servent à recevoir ces doigts pour créer une liaison en rotation avec ledit tube fileté.

12. Compresseur de ressorts selon la revendication 1, caractérisé en ce que la surface d'appui (12) du tube de guidage (5, 5', 5/1) est muni d'au moins une saillie axiale (13), (14) à laquelle est associée une encoche radiale à section droite correspondante (22), (23) ménagée dans la paroi du trou central (21) de la plaque de pression (2, 2') disposée du côté de la tête de broche (9), pour créer une liaison en rotation par obstacle entre ledit tube et ladite plaque.

13. Compresseur de ressorts selon la revendication 1, caractérisé en ce que les plaques de pression (1, 1'), (2, 2') comportent des surfaces d'appui en forme de secteur annulaire (33), (34) munies de rainures de guidage (49) ou couvertes d'une garniture à friction (35), (36), ou les deux, pour les spires du ressort à comprimer (40).

0 115 774

Fig.1

Fig.2

Fig.3

Fig.4

Fig.5

Fig.6

Fig. 7

Fig. 8

Fig. 9